# EUROPÄISCHE PATENTSCHRIFT

(11) **EP 1 436 181 B1**
(45) Veröffentlichungstag und Bekanntmachung des Hinweises auf die Patenterteilung: **01.02.2006**
(21) Anmeldenummer: 02782866.4
(22) Anmeldetag: 09.10.2002
(51) Int. Cl.: B60T 8/32, B60T 13/68

(54) **VORRICHTUNG UND VERFAHREN ZUM REGELN VON DRÜCKEN IN EINER DRUCKLUFT-BREMSANLAGE**
DEVICE AND METHOD FOR ADJUSTING PRESSURE IN A COMPRESSED AIR BRAKING SYSTEM
DISPOSITIF ET PROCEDE POUR REGULER DES PRESSIONS DANS UN SYSTEME DE FREINAGE PNEUMATIQUE

(30) Priorität: 10.10.2001 DE 10149918
(43) Veröffentlichungstag der Anmeldung: 14.07.2004
(73) Patentinhaber: KNORR-BREMSE SYSTEME FÜR NUTZFAHRZEUGE GMBH, 80809 München (DE)
(72) Erfinder: GOEBELS, Hermann, 71701 Schwieberdingen (DE)
(74) Vertreter: Schönmann, Kurt
(86) Internationale Anmeldenummer: PCT/EP2002/011295
(87) Internationale Veröffentlichungsnummer: WO 2003/033321

(56) Entgegenhaltungen:
- EP-A- 0 250 738
- EP-A- 0 307 576
- EP-A- 0 478 953
- WO-A-92/13740
- DE-A- 3 308 546
- DE-A- 3 423 944
- DE-A- 4 227 084
- DE-A- 19 653 263

## Beschreibung

Die Erfindung betrifft eine Vorrichtung zum Regeln von Drücken in einer Druckluft-Bremsanlage mit EBS, mit einer Ventileinrichtung, die mehrere Magnetventile und mindestens zwei Relaisventile aufweist, und einer Elektronikeinrichtung, die die Magnetventile der Ventileinrichtung ansteuert, wobei einem Steuereingang von jedem Relaisventil mindestens ein Magnetventil zugeordnet ist, wobei mindestens ein durch die Elektronikeinrichtung ansteuerbares Magnetventil zum Abbauen eines Steuerdruckes an den Relaisventilen vorgesehen ist, und ein den Steuerdruck an den Relaisventilen abbauender Zustand der Ventileinrichtung dadurch eingenommen wird, dass das mindestens eine Magnetventil zum Abbauen eines Steuerdruckes bestromt wird, wobei den mindestens zwei Relaisventilen ein gemeinsames, durch die Elektronikeinrichtung ansteuerbares Druckaufbaumagnetventil zugeordnet ist, und wobei getrennt von dem Druckaufbaumagnetventil durch die Elektronikeinrichtung ansteuerbare Steuerdruckzuführmittel zum Zuführen eines Steuerdrucks zu den Relaisventilen vorgesehen sind. Die Erfindung betrifft ferner ein Verfahren zum Regeln von Drücken in einer Druckluft-Bremsanlage mit EBS, bei dem mehrere Magnetventile und mindestens zwei Relaisventile verwendet werden und die Magnetventile von einer Elektronikeinrichtung angesteuert werden, wobei einem Steuereingang von jedem Relaisventil mindestens ein Magnetventil zugeordnet ist, wobei mindestens ein durch die Elektronikeinrichtung ansteuerbares Magnetventil zum Abbauen eines Steuerdruckes an den Relaisventilen vorgesehen ist und ein den Steuerdruck an den Relaisventilen abbauender Zustand der Ventileinrichtung dadurch eingenommen wird, dass das mindestens eine Magnetventil zum Abbauen eines Steuerdruckes bestromt wird, wobei den mindestens zwei Relaisventilen ein gemeinsames Druckaufbaumagnetventil zugeordnet ist, das durch die Elektronikeinrichtung angesteuert wird, und wobei getrennt von dem Druckaufbaumagnetventil Steuerdruckzuführmittel zum Zuführen eines Steuer drucks zu den Relaisventilen vorgesehen sind, die durch die Elektronikeinrichtung angesteuert werden.

Gattungsgemäße Vorrichtungen und Verfahren können im Rahmen unterschiedlicher Systeme zum Einsatz kommen. Beispiele für derartige Systeme sind: Elektronisches Bremssystem (EBS); Fahrdynamikregelung ("Vehicle Dynamic Control" (VDC); Elektronisches Stabilitätsprogramm (ESP)); Antiblockiersystem (ABS); Antriebsschlupfregelung (ASR). Beim Elektronischen Bremssystem EBS werden beispielsweise die Drücke in der Druckluft-Bremsanlage unter Verwendung einer elektronischen Regelung beeinflusst. Zu diesem Zweck kommuniziert eine Ventileinrichtung mit einer Elektronikeinrichtung, wobei Magnetventile von der Elektronikeinrichtung elektrisch angesteuert werden. Durch das Ansteuem der Magnetventile kann wiederum eine pneumatische Steuerung von Relaisventilen erfolgen.

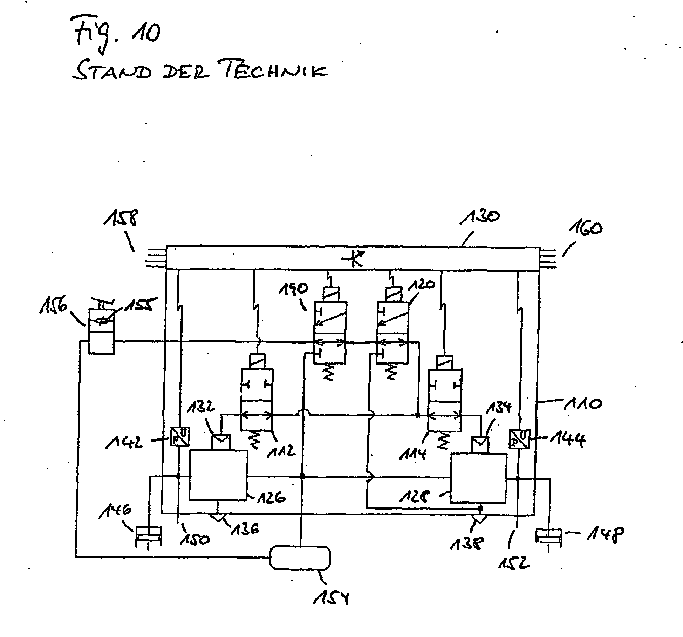

Zum besseren Verständnis der Grundlagen der Erfindung zeigt Figur 10 ein Blockdiagramm zur Erläuterung einer Vorrichtung des Standes der Technik. Eine Ventileinrichtung 110 weist mehrere Magnetventile 112, 114, 190, 120 auf. Diese Magnetventile 112, 114, 190, 120 sind mit einer Elektronikeinrichtung 130 elektrisch verbunden. Neben den Magnetventilen 112, 114, 190, 120 sind zwei Relaisventile 126, 128 vorgesehen. Steuereingänge 132, 134 der Relaisventile 126, 128 sind jeweils mit einem Magnetventil 112, 114 pneumatisch verbunden. Ebenfalls sind in der Ventileinrichtung 110 Drucksensoren 142, 144 zum Messen der Arbeitsdrücke der Relaisventile 126, 128 vorgesehen, wobei die Ausgänge der Drucksensoren 142, 144 mit Eingängen der Elektronikeinrichtung 130 elektrisch verbunden sind. Die Ausgänge der Relaisventile 126, 128 stehen mit Bremszylindern 146, 148 in Verbindung und stellen diesen einen Arbeitsdruck zur Verfügung. Bei der dargestellten Ausführungsform des Standes der Technik sind weitere Arbeitsausgänge 150, 152 vorgesehen, an denen weitere Bremszylinder angeschlossen werden können. Zum Zwecke einer Entlüftung sind jedem Relaisventil 126, 128 Außenluftverbindungen 136, 138 zugeordnet. Die Ventileinrichtung 110 steht weiterhin über Druckleitungen mit einem Druckbehälter 154 und einem Bremsventil 156 in Verbindung, wobei der Druckbehälter 154 und das Bremsventil 156 ebenfalls über eine Druckleitung miteinander verbunden sind. Die Elektronikeinrichtung 130 weist weitere Anschlüsse 158, 160 auf, die beispielsweise der Energiezufuhr, einer CAN-Schnittstelle oder einer Verbindung mit weiteren Sensoren und/oder eines Bremswertgebers 155 zur Verfügung stehen.

Die Anordnung gemäß Figur 10 arbeitet beispielsweise im Falle einer EBS-Regelung wie folgt. Wird ein dem Bremsventil 156 zugeordnetes Bremspedal betätigt, so wird die jeweilige Pedalstellung über den im Bremsventil 156 integrierten Bremswertgeber 155 als elektrisches Signal an die Elektronikeinrichtung 130 übermittelt. Bei Beginn der Betätigung des Bremsventils 156 wird das 3/2-Ventil 190 umgeschaltet. Hierdurch wird der Druckbehälter 154 über das Ventil 190 und das Entlüftungsventil 120 mit den Magnetventilen 112, 114 verbunden, die den Steuereingängen 132, 134 der Relaisventile 126, 128 zugeordnet sind. In Abhängigkeit der Größe des Ausgangssignals des Bremswertgebers 155 beziehungsweise der Pedalstellung des Bremsventils 156 werden Ausgangssignale der Elektronikeinrichtung 130 erzeugt, die als Ansteuersignale der Magnetventile 112, 114, 190, 120 dienen. Auf diese Weise können den Steuereingängen 132, 134 der Relaisventile 126, 128 Steuerdrücke zugeführt werden, die von Ausgangswerten der Elektronikeinrichtung 130 abhängen. In Abhängigkeit der Steuerdrücke an den Steuereingängen 132, 134 der Relaisventile 126, 128 wird dann der Arbeitsdruck und letztlich der Druck in den Bremszylindern 146, 148 beziehungsweise an den Arbeitsanschlüssen 150, 152 eingestellt. Durch eine Rückführung von druckabhängigen Signalen durch die Drucksensoren 142, 144 an die Elektronikeinrichtung 130 steht ein geschlossener Druckregelkreis zur Verfügung. Da die beiden Magnetventile 112, 114 an den Steuereingängen 132, 134 der Relaisventile 126, 128 unabhängig voneinander durch die Elektronikeinrichtung 130 angesteuert werden können, können auch die Arbeitsdrücke der Relaisventile 126, 128 unabhängig voneinander eingestellt werden. Der Druckabbau erfolgt, wenn eine entsprechende Änderung des Bremswertgebersignals vorliegt. In diesem Fall wird das Entlüftungsventil 120 umgeschaltet, so dass über die Außenluftverbindungen 136, 138 der Relaisventile 126, 128 die Drücke an den Steuereingängen 132, 134 herabgesetzt werden. Damit werden auch die Drücke in den Bremszylindern 146, 148 beziehungsweise an den Arbeitsausgängen 150, 152 der Ventileinrichtung 110 abgebaut.

An der beschriebenen Vorrichtung des Standes der Technik ist als nachteilig zu verzeichnen, dass die Magnetventile teilweise über die gesamte Bremsdauer erregt werden müssen. Es ist daher erforderlich, Magnetventile zu verwenden, die für eine relative Einschaltdauer von 100 % ausgelegt sind. Derartige Magnetventile haben jedoch ein träges Ansprechverhalten, was insbesondere im Hinblick auf den grundsätzlichen Wunsch schneller Druckreaktionen nach dem Einschalten beziehungsweise Abschalten einer Bestromung eines Magnetventils problematisch ist.

Die DE 42 27 084 A1 zeigt ein Druckregelmodul, das bereits im Zusammenhang mit Figur 10 beschrieben wurde.

Die DE 34 23 944 A1 beschreibt eine Fahrzeugbremsanlage, in der Bremszylinder direkt über vorgesteuerte Magnetventile belüftet und entlüftet werden.

Der Erfindung liegt die **Aufgabe** zugrunde, eine Vorrichtung und ein Verfahren zum Regeln von Drücken in einer Druckluft-Bremsanlage zur Verfügung zu stellen, bei denen die genannten Nachteile umgangen werden. Insbesondere soll die Verwendung von Magnetventilen mit einem schnelleren Ansprechverhalten ermöglicht werden.

Diese Aufgabe wird mit den Merkmalen der unabhängigen Ansprüche gelöst. Vorteilhafte Ausführungsformen der Erfindung sind in den abhängigen Ansprüchen angegeben.

Die Erfindung baut auf der gattungsgemäßen Vorrichtung dadurch auf, dass die Ventileinrichtung im Falle einer Regelung durch EBS durch Stromlosschalten des Druckaufbaumagnetventils in einen den Steuerdruck an den Relaisventilen haltenden Zustand schaltbar ist. Bei dem System des Standes der Technik, welches oben beschrieben wurde, sind in einem Ventil die Funktionen vereinigt, erstens einen Druck zur Verfügung zu stellen, mit dem die Magnetventile an den Steuereingängen arbeiten können, und zweitens eine Back-up-Funktion bereitzustellen, die den Magnetventilen an den Steuereingängen einen durch das Bremsventil beeinflussten Steuerdruck zur Verfügung stellt. Die Erfindung stellt eine Vorrichtung zur Verfügung, die mit einem reinen Druckaufbaumagnetventil ausgestattet ist, das heißt insbesondere einem Magnetventil, das keine Back-up-Funktion bereitstellen muss. Daher kann das Druckaufbaumagnetventil im Hinblick auf die spezielle Druckaufbaufunktion optimal ausgebildet sein. Bei dem beschriebenen System des Standes der Technik werden weiterhin die Druckaufbauzeitpunkte beziehungsweise Druckaufbauzeiträume für jeden Kanal separat durch die den jeweiligen Relaisventilen zugeordneten Magnetventile bestimmt. Bei dem erfindungsgemäßen System hat das Druckaufbaumagnetventil die Eigenschaft, die Druckaufbauzeitpunkte beziehungsweise Druckaufbauzeiträume gleichzeitig für beide Kanäle der Ventileinrichtung zu bestimmen, so dass eine automatische Synchronisation erreicht wird. Unterschiedliche Arbeitsdrücke in den beiden Kanälen können dann durch im Allgemeinen kurzzeitige Eingriffe der den Relaisventilen zugeordneten Magnetventile realisiert werden, die aufgrund ihrer Funktion als Haltemagnetventil bezeichnet werden können.

In einer besonders bevorzugten Ausführungsform der erfindungsgemäßen Vorrichtung ist vorgesehen, dass die Steuerdruckzuführmittel ein Back-up-Magnetventil aufweisen, über das in seinem nicht erregten Zustand den Relaisventilen beim Betätigen eines Bremsventils ein Steuerdruck zuführbar ist. Diese Ausführungsform ist demnach bei einem System mit pneumatischem Back-up einsetzbar, wobei allerdings, im Gegensatz zum Stand der Technik, das Back-up-Ventil baulich separat ausgeführt ist. Auf diese Weise wird die erfindungsgemäß vorteilhafte separate Druckaufbaufunktion nicht durch das Back-up-Ventil negativ beeinflusst.

Die erfindungsgemäße Vorrichtung ist in besonders vorteilhafter Weise dadurch weitergebildet, dass die Magnetventile teilweise so ausgeführt und angeordnet sind, dass ihre Magnete nur bei Druckänderungen erregt sind. Auf diese Weise ist es möglich, Magnetventile zu verwenden, die für relative Einschaltdauern von beispielsweise 20 % ausgelegt sind. Da beispielsweise das Druckaufbauventil nur während der tatsächlichen Druckaufbauphasen bestromt werden muss und die Haltemagnetventile nur zum Erzeugen unterschiedlicher Arbeitsdrücke in den Kanälen bestromt werden müssen, können hierfür Magnetventile mit stark verringerten zulässigen Einschaltdauern verwendet werden. Dies ermöglicht kurze Ansprechzeiten und somit rasche Reaktionszeiten des Gesamtsystems.

Es ist besonders bevorzugt, dass das Druckaufbaumagnetventil und das Back-up-Magnetventil jeweils als 2/2-Magnetventil realisiert sind. 2/2-Magnetventile sind für die grundlegenden Funktionen von Druckaufbaumagnetventil und Back-up-Magnetventil ausreichend, so dass es im Sinne eines einfachen und kostengünstigen Aufbaus der erfindungsgemäßen Vorrichtung nützlich sein kann, diese Ventile einzusetzen.

Es kann aber auch nützlich sein, dass das Druckaufbaumagnetventil als 2/2-Magnetventil realisiert ist und dass das Back-up-Magnetventil als 3/2-Magentvenil realisiert ist. Die grundsätzliche Funktionsweise der Anordnung ist identisch zu einer Anordnung mit 2/2-Back up-Magnetventil. Die Ausführungsform mit 3/2-Back-up-Magnetventilen bietet jedoch eine mitunter nützliche Variationsmöglichkeit beim Aufbau einer erfindungsgemäßen Vorrichtung.

In einer besonders bevorzugten Ausführungsform der Vorrichtung gemäß der Erfindung ist diese dadurch weitergebildet, dass jedem Relaisventil eine Außenluftverbindung zugeordnet ist. Die Belüftung der Steuerkammer der Relaisventile kann somit bei jedem Ventil über eine eigene Außenluftverbindung erfolgen, so dass sich die Entlüftungen in keiner Weise störend beeinflussen.

Es kann aber auch nützlich sein, dass zwei Relaisventile vorgesehen sind, dass die Relaisventile axial ausgerichtet sind und dass die Relaisventile eine gemeinsame Außenluftverbindung haben. Die geometrische Anordnung mit axialer Ausrichtung ermöglicht es in einfacher Weise, eine gemeinsame Außenluftverbindung für beide Relaisventile zur Verfügung zu stellen. Somit kann die Ventileinrichtung in einer Weise ausgelegt sein, dass nur eine einzige Außenluftverbindung ausreichend ist.

Es kann weiterhin von Vorteil sein, dass die den Relaisventilen zugeordneten Magnetventile jeweils als 2/2-Magentventile realisiert sind. Damit kann jedes der Magnetventile die für ein Haltemagnetventil erforderlichen Funktionen erfüllen, nämlich einem Steuereingang eines Relaisventils Druck zuzuführen oder den Druck an dem Steuereingang zu halten.

In einer weiteren Ausführungsform der Erfindung ist vorgesehen, dass mehreren Relaisventilen ein gemeinsames Entlüftungsmagnetventil zugeordnet ist, das als 3/2-Magnetventil ausgelegt ist. Durch das gemeinsame Entlüftungsmagnetventil kann somit über einen Ventilweg Druck für die Steuereingänge der Relaisventile zur Verfügung gestellt werden. Schaltet man das Entlüftungsmagnetventil um, so kann über einen anderen Ventilweg jedes der Relaisventile entlüftet werden. Indem die Haltemagnetventile, die den Relaisventilen zugeordnet sind, in eine gewünschte Stellung gebracht werden, können die Relaisventile individuell entlüftet werden.

Die erfindungsgemäße Vorrichtung kann in nützlicher Weise so gestaltet sein, dass sie als Druckregelmodul mit fünf Magnetventilen realisiert ist. Ein solches Druckregelmodul mit fünf Magnetventilen und zwei Kanälen kann dann in universeller Art und Weise eingesetzt werden. Beispielsweise ist es möglich, das Druckregelmodul mit anderen baugleichen Druckregelmodulen zu kombinieren oder Druckregelmodule mit zwei Kanälen mit anderen Druckregelmodulen mit einem Kanal zu kombinieren. Ebenfalls kann das Modul bei geeigneter Auslegung der Eingänge und Ausgänge für mehrere Achsen eines Fahrzeugs verwendet werden, so dass ein einziges Druckregelmodul für das gesamte Bremssystem eines Fahrzeugs, beispielsweise in einem Sattelanhänger, ausreichend sein kann.

In einer weiteren möglichen und mitunter nützlichen Ausführungsform ist die erfindungsgemäße Vorrichtung in der Weise weitergebildet, dass jedem Relaisventil ein 3/2-Magnetventil zugeordnet ist. Die Magnetventile an den jeweiligen Steuereingängen der Relaisventile haben somit zum einen die Funktion, den Druck an die Steuereingänge weiterzuleiten. In einer anderen Ventilstellung haben die Ventile die andere Aufgabe, eine individuelle Entlüftung der Relaisventile zu ermöglichen.

In diesem letztgenannten Fall ist es möglich, dass die Vorrichtung als Druckregelmodul mit vier Magnetventilen realisiert ist. Man kommt somit mit einem Magnetventil weniger aus als bei der Ausführungsform mit fünf Magnetventilen pro Druckregelmodul, da das gemeinsame Entlüftungsmagnetventil entbehrlich ist und die Funktionen der individuellen Entlüftung in integrierter Weise mit den individuellen Druckzuführfunktionen zur Verfügung gestellt werden. Man erhält somit ein Druckregelmodul, welches besonders kostengünstig ist. Gemäß dem Stand der Technik sind Druckluft-Regelsysteme mit denselben Funktionen bekannt, die hierfür sechs Magnetventile benötigen.

In einer weiteren bevorzugten Ausführungsform der vorliegenden Erfindung kann vorgesehen sein, dass die Mittel zum Zuführen eines Steuerdruckes einen Bremswertgeber umfassen, dessen Ausgangssignal der Elektronikeinrichtung zuführbar ist. Auf diese Weise lässt sich ein elektrisch gesteuertes Bremssystem realisieren, das kein Back-up-Magnetventil mehr aufweist und damit besonders kostengünstig ist. Vielmehr ist es möglich, das elektrische Signal eines Bremswertgebers über die Elektronikeinrichtung als Steuersignal zu verwenden. Dabei ist es nicht erforderlich, dass das Ausgangssignal des Bremswertgebers direkt derselben Elektronikeinrichtung zugeführt wird, die auch für das Ansteuern der Magnetventile verwendet wird. Vielmehr kann eine separate Elektronik verwendet werden, die dann beispielsweise über den CAN-Bus mit der Ansteuerelektronik kommuniziert. Es kann insbesondere vorteilhaft sein, in einem Fahrzeug die Ventileinrichtung ohne Back-up-Magnetventil mit einer Ventileinrichtung mit einem Back-up-Magnetventil zu kombinieren. So kann beispielsweise ein Bremskreis rein elektrisch betätigt sein, während ein zweiter Bremskreis weiterhin ein pneumatisches Back-up umfasst. Somit ist auch bei Ausfall der Elektronikeinrichtung ein konventionelles Bremsen in wenigstens einem Bremskreis noch möglich.

Die Erfindung baut auf dem gattungsgemäßen Verfahren dadurch auf, dass im Falle einer Regelung durch EBS ein den Steuerdruck an den Relaisventilen haltender Zustand der Ventileinrichtung dadurch eingenommen wird, dass das Druckaufbaumagnetventil stromlos geschaltet wird. Mit einem derartigen Verfahren können die Vorteile einer erfindungsgemäßen Vorrichtung umgesetzt werden. Insbesondere ist als vorteilhaft zu verzeichnen, dass das gemeinsame Druckaufbaumagnetventil nur während eines Druckaufbaus geöffnet sein muss und insofern auch nur während dieser Zeit bestromt sein muss. Während eines Druckhaltens oder eines Druckabbaus an den Relaisventilen kann das Druckaufbauventil geschlossen werden. Weiterhin ist der Druckaufbau automatisch synchronisiert.

Es kann besonders nützlich sein, dass als weiteres Magnetventil ein Back-up-Magnetventil verwendet wird, über das in seinem nicht erregten Zustand und damit im Back-up-Modus, den Relaisventilen bei Betätigung eines Bremsventils ein Steuerdruck zugeführt wird. Somit lässt sich das erfindungsgemäße Verfahren in einem pneumatisch gesteuerten Bremssystem einsetzen, das bei Ausfall der Elektronikeinrichtung über die Back-up-Funktion noch ein konventionelles Bremsen ermöglicht, wobei allerdings die Back-up-Funktion separat in einem Magnetventil realisiert ist.

Aus diesem Grund ist es in nützlicher Weise möglich, dass die Magnetventile teilweise so ausgeführt und angeordnet sind, dass ihre Magnete nur bei Druckänderungen erregt sind. Auf diese Weise können kostengünstige Magnetventile mit kurzen Ansprechzeiten zum Einsatz kommen.

Weiterhin kann das erfindungsgemäße Verfahren in besonders nützlicher Weise dadurch weitergebildet sein, dass für zwei Relaisventile ein gemeinsames Entlüftungsmagnetventil verwendet wird, das als 3/2-Magnetventil ausgelegt ist und über das die Relaisventile gemeinsam entlüftet werden können, und dass bei einem Druckabbau an einem ersten Relaisventil das Entlüftungsmagnetventil erregt wird und der Druckabbau an dem zweiten Relaisventil durch Erregen des Magnetventils verhindert wird, das dem zweiten Relaisventil zugeordnet ist. Man kommt somit bei gleichen Druckanforderungen in beiden Kanälen mit dem Schalten eines Druckaufbaumagnetventils und eines Entlüftungsmagnetventils für beide Kanäle der Ventileinrichtung aus. Daher sind die Vorgänge an den Relaisventilen automatisch synchronisiert. Soll bei nur einem Relaisventil ein Druck abgebaut werden, beispielsweise im Falle einer EBS-Regelung, so stehen hierfür die Schaltmöglichkeiten der Magnetventile zur Verfügung, die den Relaisventilen individuell zugeordnet sind.

Es kann aber auch nützlich sein, das Verfahren so zu gestalten, dass für jedes Relaisventil ein 3/2-Magnetvenil verwendet wird und dass bei einem Druckabbau die 3/2-Magnetventile spezifisch für jedes Relaisventil erregt werden. Diese Ausführungsform des Verfahrens hat den Vorteil, dass ein gemeinsames Entlüftungsmagnetventil für beide Relaisventile entbehrlich ist und die Entlüftungsfunktion mit der Zuführfunktion jeweils in einem Magnetventil integriert ist. Daher kann diese Ausführungsform des Verfahrens in einem Druckmodul mit nur vier Magnetventilen umgesetzt werden.

In einer weiteren vorteilhaften Ausführungsform des erfindungsgemäßen Verfahrens kann vorgesehen sein, dass die Ventileinrichtung ohne ein Back-up-Magnetventil ausgebildet ist und nur das Ausgangssignal eines Bremswertgebers zum Beeinflussen eines Steuerdruckes der Relaisventile verwendet wird. Auf diese Weise lässt sich ein besonders kostengünstiges elektrisch gesteuertes Bremssystem realisieren, da ein Back-up-Magnetventil entfällt. Es kann insbesondere vorteilhaft sein, eine solche Ventileinrichtung ohne Back-up-Magnetventil mit einer Ventileinrichtung mit Back-up-Magnetventil in einem Fahrzeug zu kombinieren.

Der Erfindung liegt die Erkenntnis zugrunde, dass auf der Grundlage der neuen Magnetventilanordnung Magnetventile eingesetzt werden können, die mit relativen Einschaltdauern im Bereich von 20 % auskommen im Vergleich zu den gemäß dem Stand der Technik erforderlichen relativen Einschaltdauern von 100 %. Eine Reduzierung der erforderlichen Einschattdauerfestigkeit von 100 % auf geringere Werte muss als wesentlicher Erfolg der vorliegenden Erfindung bewertet werden, da auf diese Weise Magnetventile, die auf der Grundlage einer hohen Stromdichte schnell schalten, verwendet werden können. Dies ist insbesondere für EBS und VDC vorteilhaft, da einerseits eine EBS-Bremsung über Minuten anhalten kann und andererseits aber auch schnelle Druckänderungen umgesetzt werden können. Bei besonders bevorzugten Ausführungsformen der vorliegenden Erfindung ist als besonders vorteilhaft zu verzeichnen, dass die Anzahl der erforderlichen Magnetventile im Vergleich zu Systemen des Standes der Technik verringert werden kann, was zu besonders kostengünstigen Lösungen und übersichtlichen Aufbauten führt.

Die Erfindung wird nun mit Bezug auf die begleitenden Zeichnungen anhand bevorzugter Ausführungsformen beispielhaft erläutert.

Dabei zeigt:
- Figur 1: ein Blockschaltbild einer ersten Ausführungsform einer erfindungsgemäßen Vorrichtung;
- Figur 2: ein Diagramm zur Erläuterung eines Druckverlaufs in Abhängigkeit der Erregung von Magnetventilen;
- Figur 3: ein Diagramm zur Erläuterung eines Druckverlaufs in Abhängigkeit der Erregung von Magnetventilen;
- Figur 4: ein Blockschaltbild einer zweiten Ausführungsform einer erfindungsgemäßen Vorrichtung;
- Figur 5: ein Blockschaltbild einer dritten Ausführungsform einer erfindungsgemäßen Vorrichtung;
- Figur 6: ein Blockschaltbild einer vierten Ausführungsform einer erfindungsgemäßen Vorrichtung;
- Figur 7: ein Diagramm zur Erläuterung eines Druckverlaufs in Abhängigkeit der Erregung von Magnetventilen;
- Figur 8: ein Diagramm zur Erläuterung eines Druckverlaufs in Abhängigkeit der Erregung von Magnetventilen;
- Figur 9: ein Blockschaltbild einer fünften Ausführungsform einer erfindungsgemäßen Vorrichtung; und
- Figur 10: ein Blockschaltbild einer Vorrichtung des Standes der Technik.

Bei den nachfolgenden Beschreibungen der Zeichnungen werden für gleiche oder vergleichbare Komponenten identische Bezugszeichen verwendet.

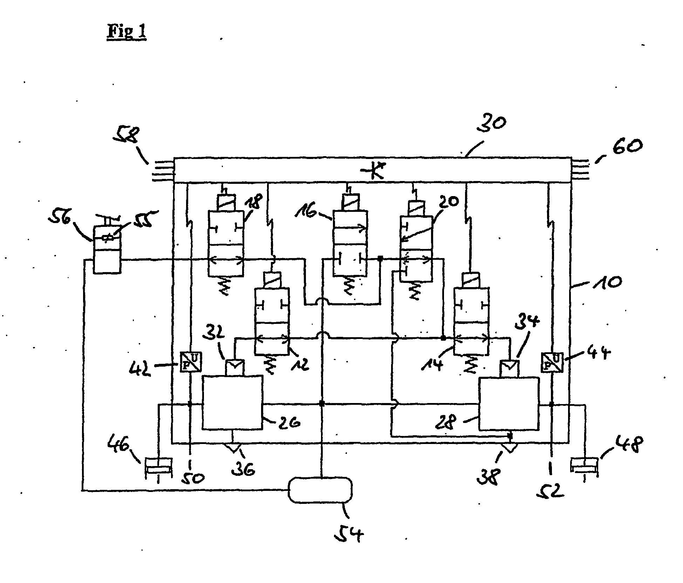

Figur 1 zeigt ein Blockschaltbild einer ersten Ausführungsform einer erfindungsgemäßen Vorrichtung. Eine Ventileinrichtung 10 weist mehrere Magnetventile 12, 14, 16, 18, 20 auf. Dabei handelt es sich um zwei 2/2-Haltemagnetventile 12,14, ein 2/2-Druckaufbaumagnetventil 16, ein 2/2-Back-up-Magnetventil 18 und ein 3/2-Entlüftungsmagnetventil 20. Diese Magnetventile 12, 14, 16, 18, 20 sind mit einer Elektronikeinrichtung 30 elektrisch verbunden. Neben den Magnetventilen 12, 14, 16, 18, 20 sind zwei Relaisventile 26, 28 vorgesehen. Steuereingänge 32, 34 der Relaisventile 26, 28 sind jeweils mit einem Magnetventil 12, 14 pneumatisch verbunden. Ebenfalls sind in der Ventileinrichtung 10 Drucksensoren 42, 44 zum Messen der Arbeitsdrücke der Relaisventile 26, 28 vorgesehen, wobei die Ausgänge der Druck sensoren 42, 44 mit Eingängen der Elektronikeinrichtung 30 elektrisch verbunden sind. Die Ausgänge der Relaisventile 26, 28 stehen mit Bremszylindern 46, 48 in Verbindung und stellen diesen einen Arbeitsdruck zur Verfügung. Bei der dargestellten Ausführungsform der Erfindung sind weitere Arbeitsausgänge 50, 52 vorgesehen, an denen weitere Bremszylinder angeschlossen werden können. Zum Zwecke einer Entlüftung sind jedem Relaisventil 26, 28 Außenluftverbindungen 36, 38 zugeordnet. Die Ventileinrichtung 10 steht weiterhin über Druckleitungen mit einem Druckbehälter 54 und einem Bremsventil 56 in Verbindung, wobei der Druckbehälter 54 und das Bremsventil 56 ebenfalls über eine Druckleitung miteinander verbunden sind. Im Bremsventil 56 ist ein Bremswertgeber 55 integriert, der die jeweilige Pedalstellung als elektrisches Signal der Elektronikeinrichtung 30 übermittelt. Es ist ebenfalls möglich, das Bremswertsignal an eine zweite Elektronik zu übermitteln, die dann wiederum die Pedalstellungsinformation über CAN an die Elektronikeinrichtung 30 übermittelt. Die Elektronikeinrichtung 30 weist weitere Anschlüsse 58, 60 auf, die beispielsweise der Energiezufuhr, einer CAN-Schnittstelle oder einer Verbindung mit weiteren Sensoren zur Verfügung stehen.

Die Anordnung gemäß Figur 1 arbeitet beispielsweise im Falle einer EBS-Regelung wie folgt. Wird ein dem Bremsventil 56 zugeordnetes Bremspedal betätigt, so wird die jeweilige Pedalstellung über den Bremswertgeber 55 als elektrisches Signal an die Elektronikeinrichtung 30 übermittelt. Bei Beginn der Betätigung des Bremsventils 56 wird das als Back-up-Magnetventil wirkende 2/2-Ventil 18 umgeschaltet, so dass die Steuerdruckverbindung zwischen Bremsventil 56 und den Steuereingängen 32, 34 der Relaisventile 26, 28 unterbrochen wird. Weiterhin wird das Druckaufbaumagnetventil 16 geöffnet. Hierdurch wird der Druckbehälter 54 über das Ventil 16 und das Entlüftungsventil 20 mit den als Haltemagnetventile wirkenden Magnetventilen 12, 14 an den Steuereingängen 32, 34 der Relaisventile 26, 28 verbunden. In Abhängigkeit der Größe des Ausgangssignals des Bremswertgebers 55 werden Ausgangssignale der Elektronikeinrichtung 30 erzeugt, die als Ansteuersignale der Magnetventile 12,14,16,18,20 dienen. Auf diese Weise können den Steuereingängen 32, 34 der Relaisventile 26, 28 Steuerdrücke zugeführt werden, die von Ausgangswerten der Elektronikeinrichtung 30 abhängen. In Abhängigkeit der Steuerdrücke an den Steuereingängen 32, 34 der Relaisventile 26, 28 wird dann der Arbeitsdruck und letztlich der Druck in den Bremszylindern 46, 48 beziehungsweise an den Arbeitsanschlüssen 50, 52 eingestellt. Durch eine Rückführung von druckabhängigen Signalen durch die Drucksensoren 42, 44 an die Elektronikeinrichtung 30 steht ein geschlossener Druckregelkreis zur Verfügung. Da die beiden Magnetventile 12, 14 an den Steuereingängen 32, 34 der Relaisventile 26, 28 unabhängig voneinander durch die Elektronikeinrichtung 30 angesteuert werden können, können auch die Arbeitsdrücke der Relaisventile 26, 28 unabhängig voneinander eingestellt werden. Der Druckabbau erfolgt, wenn eine entsprechende Änderung des Bremswertgebersignals vorliegt. In diesem Fall wird das Entlüftungsventil 20 umgeschaltet, so dass über die Außenluftverbindungen 36, 38 der Relaisventile 26, 28 die Drücke an den Steuereingängen 32, 34 herabgesetzt werden. Damit werden auch die Drücke in dem Bremszylindern 46, 48 beziehungsweise an den Arbeitsausgängen 50, 52 der Ventileinrichtung 10 abgebaut. Soll während einer Druckaufbauphase oder bei geöffnetem Entlüftungsventil 20 der Druck eines Relaisventils 26, 28 gehalten werden, so wird das entsprechende Haltemagnetventil 12, 14 erregt und damit in Sperrstellung gebracht.

In Figur 1 ist aus Gründen der Übersichtlichkeit nur ein Bremskreis in Verbindung mit dem Bremsventil 56 und den Bremszylindern 46, 48 einer Achse dargestellt. Tatsächlich umfasst das Bremssystem in der Regel zwei oder mehr Bremskreise mit einer geeigneten Anzahl von Ventileinrichtungen. Beispielsweise können zum Betreiben des gesamten Bremssystems eines Fahrzeugs mit zwei oder drei Achsen zwei Druckregelmodule der dargestellten Art verwendet werden, eines für die Vorderachse oder die Vorderachsen und ein zweites für die Hinterachse oder die Hinterachsen. Ebenfalls kann das dargestellte Druckregelmodul mit zwei Kanälen mit einem oder zwei Druckregelmodulen mit nur einem Kanal kombiniert werden. Die Etektronikeinrichtung 30 kann neben den bereits erwähnten elektrischen Verbindungen zahlreiche andere Verbindung aufweisen, wie zum Beispiel zu Abnutzungssensoren, Gierratensensoren oder Anzeigeleuchten. Diese Ausführungen zu Figur 1 gelten gleichermaßen für die nachfolgend beschriebenen Ausführungsformen erfindungsgemäßer Vorrichtungen.

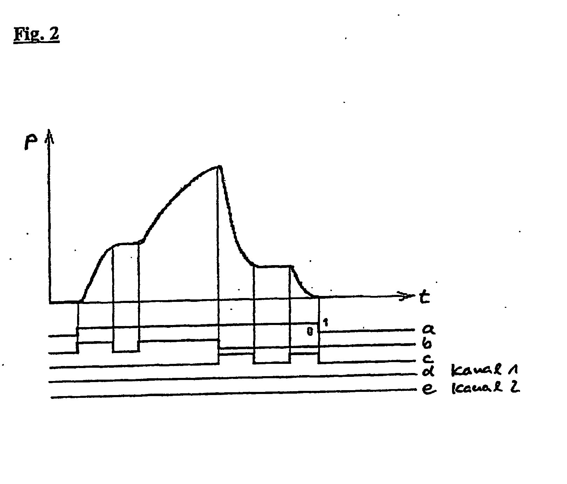

Figur 2 zeigt ein Diagramm zur Erläuterung eines Druckverlaufs in Abhängigkeit der Erregung von Magnetventilen. Es wird ein EBS-Bremsvorgang erläutert. Auf der Hochachse des Diagramms ist der Druck p in einem Bremszylinder aufgetragen. Auf der horizontalen Achse ist die Zeit t aufgetragen. Unterhalb des Diagramms sind vier Signallinien gezeigt, die die Erregungszustände der unterschiedlichen Magnetventile 12, 14, 16, 18, 20 aus Figur 1 veranschaulichen. In dieser Darstellung gemäß Figur 2 und in nachfolgenden entsprechenden Darstellungen bedeutet ein Wert von 1, dass das jeweilige Magnetventil erregt ist; ein Wert von 0 bedeutet, dass das jeweilige Magnetventil nicht erregt ist. Linie a zeigt den Erregungsverlauf des Back-up-Magnetventils 18, Linie b zeigt den Erregungsverlauf des Druckaufbaumagnetventils 16, Linie c zeigt den Erregungsverlauf des Entlüftungsmagnetventils 20, Linie d zeigt den Erregungsverlauf des Haltemagnetventils 12 (Kanal 1), und Linie e zeigt den Erregungsverlauf des Haltemagnetventils 14 (Kanal 2). Wenn der Fahrer das Bremspedal des Fahrzeugs tritt und insofem ein Signal des Bremswertgebers 55 vorliegt, wird das Back-up-Magnetventil 18 durch die Elektronikeinrichtung 30 bestromt und in eine geschlossene Position überführt. Zum selben Zeitpunkt wird das Druckaufbauventil 16 bestromt. Folglich wird der Druckbehälter 54 über das Entlüftungsmagnetventil 20 mit den Eingängen der Haltemagnetventile 12, 14 verbunden. Da sich diese in einem geöffneten Zustand befinden, wird den Steuereingängen 32, 34 der Relaisventile 26, 28 ein erhöhter Druck zugeführt. Folglich findet ein Druckaufbau in den Bremskammem 46, 48 statt. Wird nach einer Weile, wie es in Figur 2 dargestellt ist, die Erregung des Druckaufbauventils 16 unterbrochen, so wird der bis dahin aufgebaute Druck im Bremszylinder gehalten. Wird zu einem noch späteren Zeitpunkt das Druckaufbauventil 16 wieder erregt, so findet ein weiterer Druckaufbau statt. Ein Druckabbau erfolgt dann, wenn die Erregung des Druckaufbauventils 16 abgebrochen wird und das Entlüftungsmagnetventil 20 erregt wird. Während der Zeit, in der das Entlüftungsmagnetventil erregt bleibt, findet ein Druckabbau statt. Wenn die Erregung des Entlüftungsmagnetventils 20 unterbrochen wird, wird wiederum der zu diesem Zeitpunkt bestehende Druck gehalten. Ein weiterer Abbau des Drucks kann dann durch erneutes Erregen des Entlüftungsmagnetventils 20 erfolgen. Am Ende des EBS-Regelzyklus wird dann auch wieder die Erregung des Back-up-Magnetventils 18 abgeschaltet, so dass das Back-up-Magnetventil 18 seine Back-up-Funktion durch Bereitstellen des Steuerdrucks ausübt. Durch die Back-up-Funktion wird auch bei Ausfall der elektronischen Steuereinrichtung ein konventionelles Bremsen ermöglicht.

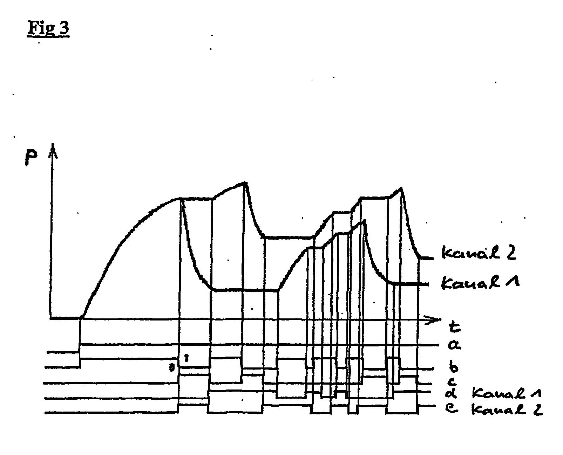

Figur 3 zeigt ein Diagramm zur Erläuterung eines Druckverlaufs in Abhängigkeit der Erregung von Magnetventilen. In diesem Diagramm sind Druckverläufe p in den verschiedenen Bremszylindern 46 und 48 gemäß Figur 1 für einen EBS-ABS-Bremsvorgang in Abhängigkeit der Zeit t dargestellt. Linie a zeigt den Erregungsverlauf des Back-up-Magnetventils 18, Linie b zeigt den Erregungsverlauf des Druckaufbaumagnetventils 16, Linie c zeigt den Erregungsverlauf des Entlüftungsmagnetventils 20, Linie d zeigt den Erregungsverlauf des Haltemagnetventils 12 (Kanal 1) und Linie e zeigt den Erregungsverlauf des Haltemagnetventils 14 (Kanal 2). Der Anfang des Bremsvorgangs entspricht den im Zusammenhang mit Figur 2 erläuterten Vorgängen. Das Back-up-Magnetventil 18 wird erregt und damit geschlossen, und das Druckaufbaumagnetventil 16 wird erregt, so dass letztlich ein Druckaufbau in den Bremszylindern 46, 48 erfolgen kann. Zu einem späteren Zeitpunkt findet ein ABS-Eingriff statt, wobei gleichzeitig das Entlüftungsmagnetventil 20 durch Erregung umgeschaltet wird und die Erregung des Druckaufbauventils 16 abgeschaltet wird. Das Haltemagnetventil 12 von Kanal 1 bleibt in einem nicht erregten Zustand, während das Haltemagnetventil 14 von Kanal 2 in einen erregten Zustand überführt wird. Folglich verhalten sich die Drücke in den beiden Bremskammem 46 und 48 unterschiedlich. Der Druck in dem Bremszylinder 48 (Kanal 2) wird gehalten, während ein Druckabbau in dem Bremszylinder 46 (Kanal 1) stattfindet. Zu einem späteren Zeitpunkt wird das Druckaufbaumagnetventil 16 wieder in einen erregten Zustand überführt, und die Erregung des Entlüftungsmagnetventils 20 wird abgeschaltet. Gleichzeitig wird ebenfalls die Erregung des Haltemagnetventils 14 abgeschaltet, und das Halteventil 12 wird erregt. Folglich findet in dem Bremszylinder 46 (Kanal 1) ein Halten des Drucks statt, während im Bremszylinder 48 (Kanal 2) ein Druckaufbau erfolgt. Der Druckaufbau in dem Bremszylinder 48 (Kanal 2) wird zu einem Zeitpunkt beendet und in einen Druckabbau überführt, nach welchem die Druckhaltefunktion in dem Bremszylinder 46 (Kanal 1) noch fortgesetzt wird. Dies kann erreicht werden, indem das Haltemagnetventil 12 (Kanal 1) in seinem erregten Zustand bleibt und das Entlüftungsventil 20 erregt wird. Danach wird auch das Haltemagnetventil 14 erregt, so dass auch im Bremszylinder 48 (Kanal 2) ein weiteres Druckhalten erfolgt. Auf diese Weise lassen sich zahlreiche Kombinationen der unterschiedlichen Erregungszustände der Magnetventile durchspielen. Grundsätzlich gilt, dass, wenn nur ein Kanal entlüftet werden soll, der andere Kanal in den Haltemodus übergeht. Der aufgebaute ABS-Druck wird durch die Halteventile 12, 14 eingestellt, wobei verschiedene Druckniveaus möglich sind. Das Druckaufbaumagnetventil 16 ist stets in einem nicht erregten Zustand, wenn entweder das Entlüftungsventil 20 erregt ist oder beide Haltemagnetventile 12, 14 gleichzeitig erregt sind. Ebenfalls ist zu bemerken, dass eine vollständig funktionierende ABS-Regelung möglich ist, wenn EBS außer Funktion ist und die elektronische Steuereinrichtung noch in der Lage ist, die ABS-Funktion bereitzustellen. Der Steuerdruck kommt in diesem Fall direkt vom Bremsventil 56 über das Back-up-Magnetventil 18, das im nicht erregten Zustand auf Durchgang geschaltet ist. Dies ist ein zusätzlicher Vorteil der vorliegenden Erfindung aufgrund getrennter Magnetventile für einen EBS-Vorgang und einen ABS-Vorgang.

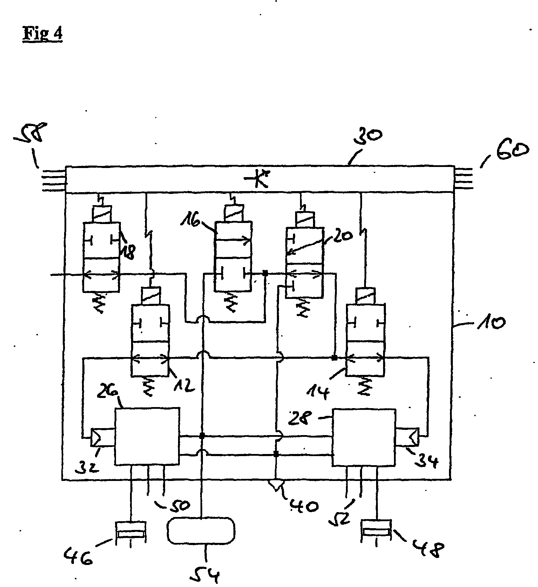

Figur 4 zeigt ein Blockschaltbild einer zweiten Ausführungsform einer erfindungsgemäßen Vorrichtung. Die Peripherie der Anordnung kann derjenigen aus Figur 1 entsprechen. Die Anordnung entspricht weitgehend der Anordnung gemäß Figur 1, wobei allerdings die Achsen der Relaisventile 26, 28 horizontal ausgerichtet sind. Bei dieser Anordnung ist es in besonders einfacher Weise möglich, für beide Relaisventile 26, 28 eine einzige Außenluftverbindung 40 vorzusehen. Bei dieser und den nachfolgend beschriebenen Ausführungsformen der Erfindung wurde auf die Darstellung der Drucksensorik verzichtet. Diese kann beispielsweise wie bei der Ausführungsform gemäß Figur 1 ausgelegt sein.

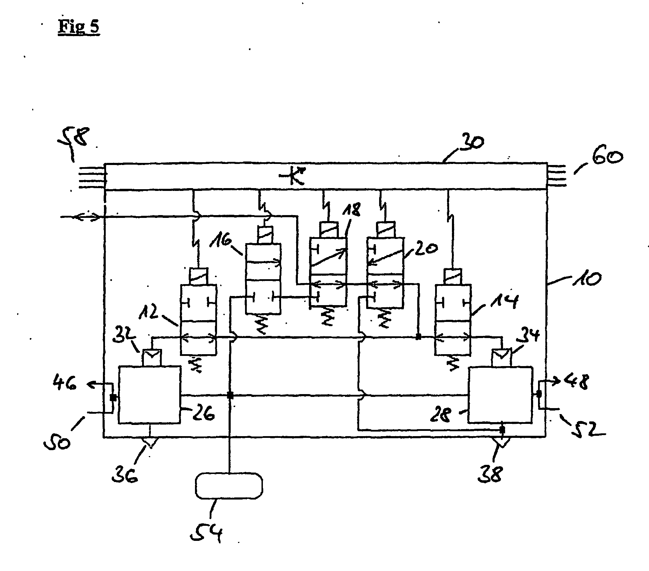

Figur 5 zeigt ein Blockschaltbild einer dritten Ausführungsform einer erfindungsgemäßen Vorrichtung. Die Peripherie der Anordnung kann derjenigen aus Figur 1 entsprechen. Wiederum entspricht die Anordnung von ihrer Funktionalität der Anordnung gemäß Figur 1. Im Unterschied zu Figur 1 ist das Back-up-Magnetventil 18 als 3/2-Magnetventil ausgebildet.

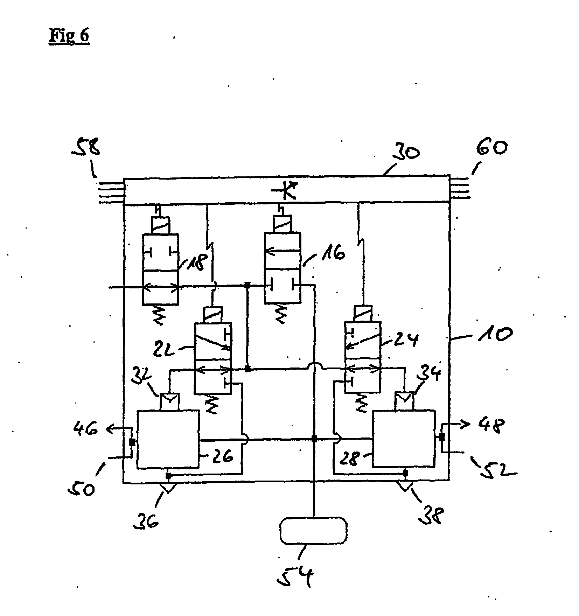

Figur 6 zeigt ein Blockschaltbild einer vierten Ausführungsform einer erfindungsgemäßen Vorrichtung. Die Peripherie der Anordnung kann derjenigen aus Figur 1 entsprechen. Auch hier entsprechen zahlreiche Einzelheiten der Anordnung derjenigen aus Figur 1. Im Unterschied zu Figur 1 ist kein gemeinsames Entlüftungsventil für beide Relaisventile 26, 28 mehr vorgesehen. Vielmehr ist die Entlüftungsfunktion in einem 3/2-Magnetventil 22, 24 für jedes Relaisventil 26, 28 individuell realisiert. Das Modul kommt daher mit vier Magnetventilen 16, 18, 22, 24 aus.

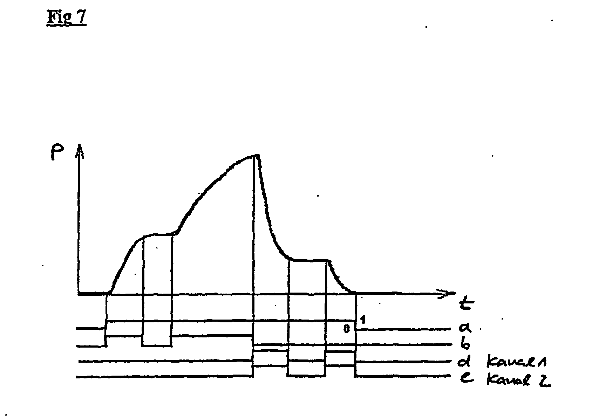

Figur 7 zeigt ein Diagramm zur Erläuterung eines Druckverlaufs p in Abhängigkeit der Erregung von Magnetventilen eines Moduls gemäß Figur 6 und der Zeit t. Es wird ein EBS-Bremsvorgang erläutert. Linie a zeigt den Erregungsverlauf des Back-up-Magnetventils 18, Linie b zeigt den Erregungsverlauf des Druckaufbaumagnetventils 16, Linie d zeigt den Erregungsverlauf des Magnetventils 22 (Kanal 1) und Linie e zeigt den Erregungsverlauf des Magnetventils 24 (Kanal 2). Die Vorgänge entsprechen in weiten Teilen denjenigen, die anhand von Figur 2 erläutert wurden, insbesondere der Druckaufbau und die Druckhaltefunktion. Der Druckabbau in beiden Kanälen erfolgt dann allerdings so, dass die beiden 3/2-Magnetventile 22, 24 bei nicht erregtem Druckaufbaumagnetventil 16 erregt werden.

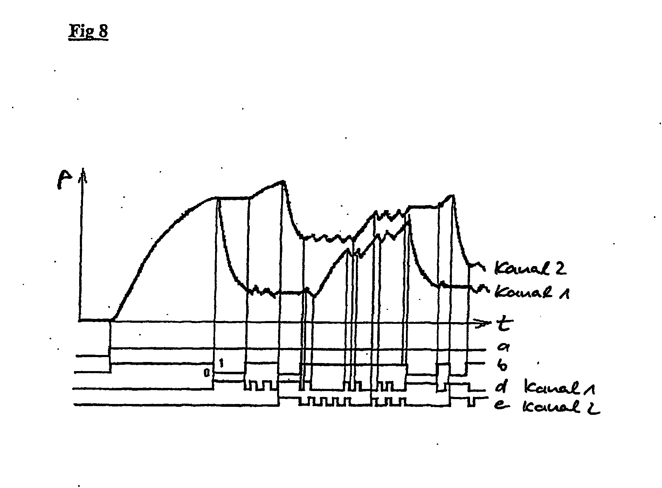

Figur 8 zeigt ein Diagramm zur Erläuterung eines Druckverlaufs p in Abhängigkeit der Erregung von Magnetventilen eines Moduls gemäß Figur 6 und der Zeit t. Es wird ein ABS-Vorgang beschrieben. Linie a zeigt den Erregungsverlauf des Back-up-Magnetventils 18, Linie b zeigt den Erregungsverlauf des Druckaufbaumagnetventils 16, Linie d zeigt den Erregungsverlauf des Magnetventils 22 (Kanal 1) und Linie e zeigt den Erregungsverlauf des Magnetventils 24 (Kanal 2). Die Art des Druckaufbaus, des Druckabbaus und ebenfalls des Haltens des Druckes wird durch die Erregungszustände der kanalspezifischen Entlüftungsmagnetventile 22, 24 gesteuert. Hierzu werden unterschiedliche Pulsfolgen verwendet, die die jeweiligen 3/2-Magnetventile 22, 24 erregen, wodurch im zeitlichen Durchschnitt bestimmte Solldruckwerte eingestellt werden können. Wenn beispielsweise ein Kanal in dem Entlüftungsmodus ist, kann eine Druckhaltefunktion des anderen Kanals durch das Abschalten der Erregung des Druckaufbaumagnetventils 16 erfolgen. Nicht dargestellt und abweichend zu den Druckverläufen in Figur 8 ist es ebenfalls möglich, in einem Kanal Druck aufzubauen und in dem anderen Kanal Druck abzubauen. In diesem Fall bleibt das Druckaufbaumagnetventil 16 während des gesamten ABS-Vorgangs in seiner erregten Position, außer wenn der Druck in beiden Kanälen gleichzeitig abgebaut werden soll.

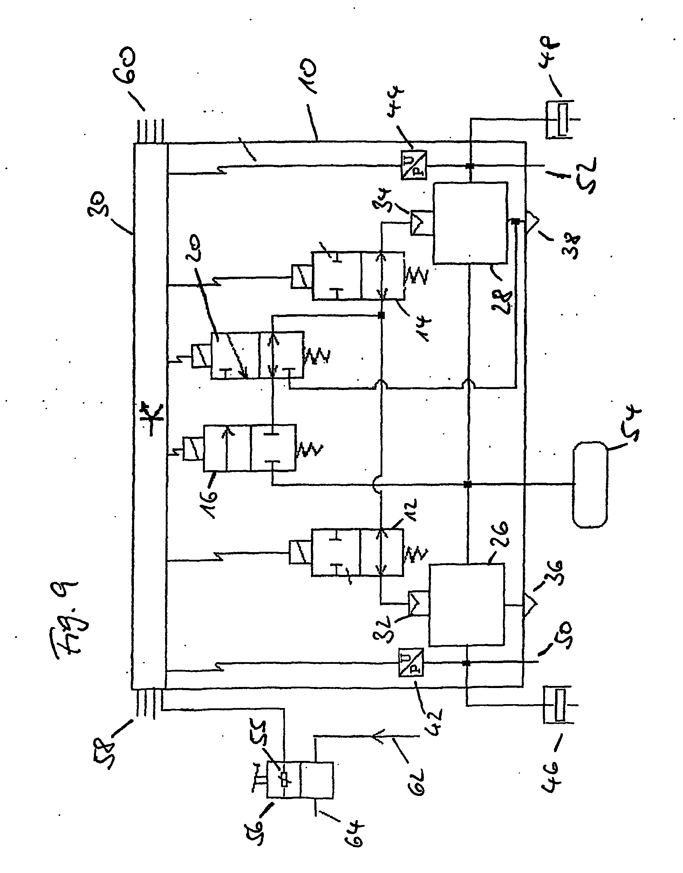

Figur 9 zeigt ein Blockschaltbild einer fünften Ausführungsform einer erfindungsgemäßen Vorrichtung. Diese entspricht in weiten Teilen der Ausführungsform gemäß Figur 1. Im Unterschied zu der Vorrichtung gemäß Figur 1 ist bei der Vorrichtung in Figur 9 kein Back-up-Magnetventil vorgesehen. Vielmehr erfolgt die Steuerung der Vorrichtung elektrisch. Hierzu wird ein Ausgangssignal des Bremswertgebers 55 der Elektronikeinrichtung 30 zugeführt, wobei die Übermittlung dieses Signals nicht direkt erfolgen muss, sondern beispielsweise auch über eine weitere Elektronik unter Vermittlung von zum Beispiel dem CAN-Bus erfolgen kann.

Bei der Vorrichtung gemäß Figur 9 ist eine weitere Besonderheit erwähnenswert und im Rahmen der vorliegenden Erfindung besonders nützlich. Der ausführlich dargestellte Teil von Figur 9 zeigt, wie oben erläutert, eine elektrisch betätigte Anordnung ohne Back-up-Magentventil. Diese kann in vorteilhafter Weise mit einer pneumatischen Steuerung mit Back-up-Magnetvenil kombiniert werden. Hierzu kann das Bremsventil 56 mit einer Druckversorgung 62 verbunden sein, und einen Steuerdruck 64 neben dem elektrischen Steuersignal des Bremswertgebers 55 zur Verfügung stellen. Der Steuerdruck 64 kann dann beispielsweise für den Bremskreis mit Back-up-Magentventil genutzt werden, so dass eine pneumatische Steuerung mit einer elektrischen Steuerung kombiniert wird. Damit ist auch bei Ausfall der Elektronikeinrichtung 30 der Bremskreis mit Back-up-Magentventil noch konventionell bremsbar.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Vorrichtung zum Regeln von Drücken in einer Druckluft-Bremsanlage mit EBS, mit
- einer Ventileinrichtung (10), die mehrere Magnetventile (12, 14, 16, 18, 20, 22, 24) und mindestens zwei Relaisventile (26, 28) aufweist, und
- einer Elektronikeinrichtung (30), die die Magnetventile (12, 14, 16, 18, 20, 22, 24) der Ventileinrichtung (10) ansteuert,
- wobei einem Steuereingang (32, 34) von jedem Relaisventil (26, 28) mindestens ein Magnetventil (12, 14, 22, 24) zugeordnet ist,
- wobei mindestens ein durch die Elektronikeinrichtung (30) ansteuerbares Magnetventil (20, 22, 24) zum Abbauen eines Steuerdruckes an den Relaisventilen vorgesehen ist, und ein den Steuerdruck an den Relaisventilen (26, 28) abbauender Zustand der Ventileinrichtung (10) **dadurch** eingenommen wird, dass das mindestens eine Magnetventil (20, 22, 24) zum Abbauen eines Steuerdruckes bestromt wird,
- wobei den mindestens zwei Relaisventilen (26, 28) ein **ge**meinsames, durch die Elektronikeinrichtung (30) ansteuerbares Druckaufbaumagnetventil (16) zugeordnet ist, und
- wobei getrennt von dem Druckaufbaumagnetventil (16) durch die Elektronikeinrichtung (30) ansteuerbare Steuerdruckzuführmittel (18, 12, 14, 55) zum Zuführen eines Steuerdrucks zu den Relaisventilen (26, 28) vorgesehen sind,
**dadurch gekennzeichnet, dass** die Ventileinrichtung (10) im Falle einer Regelung durch EBS durch Stromlosschalten des Druckaufbaumagnetventils (16) in einen den Steuerdruck an den Relaisventilen (26, 28) haltenden Zustand schaltbar ist.

2. Vorrichtung nach Anspruch 1, **dadurch gekennzeichnet, dass** die Steuerdruckzuführmittel ein Back-up-Magnetventil (18) aufweisen, über das in seinem nicht erregten Zustand den Relaisventilen (26, 28) beim Betätigen eines Bremsventils (56) ein Steuerdruck zuführbar ist.

3. Vorrichtung nach Anspruch 1 oder 2, **dadurch gekennzeichnet, dass** die Magnetventile (12, 14, 16, 20, 22, 24) teilweise so ausgeführt und angeordnet sind, dass ihre Magnete nur bei Druckänderungen erregt sind.

4. Vorrichtung nach wenigstens Anspruch 2, **dadurch gekennzeichnet, dass** das Druckaufbaumagnetventil (16) und das Back-up-Magnetventil (18) jeweils als 2/2-Magnetventil realisiert sind.

5. Vorrichtung nach Anspruch 2 oder nach Ansprüchen 2 und 3, **dadurch gekennzeichnet,**
- **dass** das Druckaufbaumagnetventil (16) als 2/2-Magnetventil realisiert ist und
- **dass** das Back-up-Magnetventil (18) als 3/2-Magnetventil realisiert sind.

6. Vorrichtung nach einem der vorangehenden Ansprüche, **dadurch gekennzeichnet, dass** jedem Relaisventil (26, 28) eine Außenluftverbindung (36, 38) zugeordnet ist.

7. Vorrichtung nach Anspruch einem der vorangehenden Ansprüche, **dadurch gekennzeichnet,**
- **dass** zwei Relaisventile (26, 28) vorgesehen sind,
- **dass** die Relaisventile (26, 28) horizontal auf eine gemeinsame Achse ausgerichtet sind und
- **dass** die Relaisventile (26, 28) eine gemeinsame Außenluftverbindung (40) haben.

8. Vorrichtung nach einem der vorangehenden Ansprüche, **dadurch gekennzeichnet, dass** die den Relaisventilen (26, 28) zugeordneten Haltemagnetventile (12, 14) jeweils als 2/2-Magnetventil realisiert sind.

9. Vorrichtung nach einem der vorangehenden Ansprüche, **dadurch gekennzeichnet, dass** mehreren Relaisventilen (26, 28) ein gemeinsames Entlüftungsmagnetventil (20) zugeordnet ist, das als 3/2-Magnetventil ausgelegt ist.

10. Vorrichtung nach einem der vorangehenden Ansprüche, **dadurch gekennzeichnet, dass** sie als Druckregelmodul mit fünf Magnetventilen (12, 14, 16, 18, 20) realisiert ist.

11. Vorrichtung nach einem der Ansprüche 1 bis 7, **dadurch gekennzeichnet, dass** jedem Relaisventil (26, 28) ein 3/2-Magnetventil (22, 24) zugeordnet ist.

12. Vorrichtung nach Anspruch 11, **dadurch gekennzeichnet, dass** sie als Druckregelmodul mit vier Magnetventilen (22, 24, 16, 18) realisiert ist.

13. Vorrichtung nach einem der vorangehenden Ansprüche, **dadurch gekennzeichnet, dass** die Steuerdruckzuführmittel einen Bremswertgeber (55) umfassen, dessen Ausgangssignal der Elektronikeinrichtung (30) zuführbar ist.

14. Verfahren zum Regeln von Drücken in einer Druckluft-Bremsanlage mit EBS, bei dem
- mehrere Magnetventile (12, 14, 16, 18, 20, 22, 24) und mindestens zwei Relaisventile (26, 28) verwendet werden und
- die Magnetventile (12, 14, 16, 18, 20, 22, 24) von einer Elektronikeinrichtung (30) angesteuert werden,
- wobei einem Steuereingang (32, 34) von jedem Relaisventil (26, 28) mindestens ein Magnetventil (12, 14, 22, 24) zugeordnet ist,
- wobei mindestens ein durch die Elektronikeinrichtung (30) ansteuerbares Magnetventil (20, 22, 24) zum Abbauen eines Steuerdruckes an den Relaisventilen vorgesehen ist und ein den Steuerdruck an den Relaisventilen (26, 28) abbauender Zustand der Ventileinrichtung (10) **dadurch** eingenommen wird, dass das mindestens eine Magnetventil (20, 22, 24) zum Abbauen eines Steuerdruckes bestromt wird,
- wobei den mindestens zwei Relaisventilen (26, 28) ein gemeinsames Druckaufbaumagnetventil (16) zugeordnet ist, das durch die Elektronikeinrichtung (30) angesteuert wird, und
- wobei getrennt von dem Druckaufbaumagnetventil (16) Steuerdruckzuführmittel (18, 12, 14, 55) zum Zuführen eines Steuerdrucks zu den Relaisventilen (26, 28) vorgesehen sind, die durch die Elektronikeinrichtung (30) angesteuert werden,
**dadurch gekennzeichnet, dass** im Falle einer Regelung durch EBS ein den Steuerdruck an den Relaisventilen (26, 28) haltender Zustand der Ventileinrichtung (10) **dadurch** eingenommen wird, dass das Druckaufbaumagnetventil (16) stromlos geschaltet wird.

15. Verfahren nach Anspruch 14, **dadurch gekennzeichnet, dass** als weiteres Magnetventil ein Back-up-Magnetventil (18) verwendet wird, über das in seinem nicht erregten Zustand den Relaisventilen (26, 28) bei Betätigung eines Bremsventils (56) ein Steuerdruck zugeführt wird.

16. Verfahren nach Anspruch 14 oder 15, **dadurch gekennzeichnet, dass** die Magnetventile (12. 14, 16, 20, 22, 24) teilweise so ausgeführt und angeordnet sind, dass ihre Magnete nur bei Druckänderungen erregt sind.

17. Verfahren nach einem der Ansprüche 14 bis 16, **dadurch gekennzeichnet,**
- **dass** für zwei Relaisventile (26, 28) ein gemeinsames Entlüftungsmagnetventil (20) verwendet wird, das als 3/2-Magnetventil ausgelegt ist und über das die Relaisventile (26, 28) gemeinsam entlüftet werden können, und
- **dass** bei einem Druckabbau an einem ersten Relaisventil (26) das Entlüftungsmagnetventil (20) erregt wird und der Druckabbau an dem zweiten Relaisventil (28) durch Erregen des Magnetventils (14) verhindert wird, das dem zweiten Relaisventil (28) zugeordnet ist.

18. Verfahren nach einem der Ansprüche 14 bis 17, **dadurch gekennzeichnet,**
- **dass** für jedes Relaisventil (26, 28) ein 3/2-Magnetventil (22, 24) verwendet wird und
- **dass** bei einem Druckabbau die 3/2-Magnetventile (22, 24) spezifisch für jedes Relaisventil (26, 28) erregt werden.

19. Verfahren nach einem der Ansprüche 14 bis 18, **dadurch gekennzeichnet, dass** ein Ausgangssignal eines Bremswertgebers (55) zum Beeinflussen eines Steuerdruckes der Relaisventile (26, 28) verwendet wird.

## Claims

1. Device for the regulation of pressures in a compressed-air brake system having EBS, with
- a valve means (10) which has a plurality of solenoid valves (12, 14, 16, 18, 20, 22, 24) and at least two relay valves (26, 28), and
- an electronic means (30) which activates the solenoid valves (12, 14, 16, 18, 20, 22, 24) of the valve means (10),
- a control input (32, 34) of each relay valve (26, 28) being assigned at least one solenoid valve (12, 14, 22, 24),
- at least one solenoid valve (20, 22, 24) activatable by the electronic means (30) being provided for reducing a control pressure at the relay valves, and a state of the valve means (10) in which the control pressure at the relay valves (26, 28) is reduced being assumed by the application of current to the at least one solenoid valve (20, 22, 24) for reduction of a control pressure,
- the at least two relay valves (26, 28) being assigned a common pressure build-up solenoid valve (16) activatable by the electronic means (30), and
- control-pressure supply means (18, 12, 14, 55), activatable by the electronic means (30), for supplying a control pressure to the relay valves (26, 28) being provided separately from the pressure build-up solenoid valve (16),
**characterized in that**, in the event of regulation by EBS, the valve means (10) can be switched, by switching the pressure build-up solenoid valve (16) to currentless, into a state in which the control pressure at the relay valves (26, 28) is held.

2. Device according to Claim 1, **characterized in that** the control-pressure supply means have a back-up solenoid valve (18), via which, in its non-excited state, a control pressure can be supplied to the relay valves (26, 28) when a brake valve (56) is actuated.

3. Device according to Claim 1 or 2, **characterized in that** the solenoid valves (12, 14, 16, 20, 22, 24) are partly designed and arranged in such a way that their magnets are excited only in the event of pressure changes.

4. Device according to at least Claim 2, **characterized in that** the pressure build-up solenoid valve (16) and the back-up solenoid valve (18) are in each case implemented as a 2/2-way solenoid valve.

5. Device according to Claim 2 or according to Claims 2 and 3, **characterized**
- **in that** the pressure build-up solenoid valve (16) is implemented as a 2/2-way solenoid valve, and
- **in that** the back-up solenoid valve (18) is implemented as a 3/2-way solenoid valve.

6. Device according to one of the preceding claims, **characterized in that** each relay valve (26, 28) is assigned an outside-air connection (36, 38).

7. Device according to one of the preceding claims, **characterized**
- **in that** two relay valves (26, 28) are provided,
- **in that** the relay valves (26, 28) are aligned horizontally with a common axis, and
- **in that** the relay valves (26, 28) have a common outside-air connection (40).

8. Device according to one of the preceding claims, **characterized in that** the holding solenoid valves (12, 14) assigned to the relay valves (26, 28) are implemented in each case as a 2/2-way solenoid valve.

9. Device according to one of the preceding claims, **characterized in that** a plurality of relay valves (26, 28) are assigned a common ventilation solenoid valve (20) which is designed as a 3/2-way solenoid valve.

10. Device according to one of the preceding claims, **characterized in that** it is implemented as a pressure-regulating module with five solenoid valves (12, 14, 16, 18, 20).

11. Device according to one of Claims 1 to 7, **characterized in that** each relay valve (26, 28) is assigned a 3/2-way solenoid valve (22, 24).

12. Device according to Claim 11, **characterized in that** it is implemented as a pressure-regulating module with four solenoid valves (22, 24, 16, 18).

13. Device according to one of the preceding claims, **characterized in that** the control-pressure supply means comprise a brake-value transmitter (55), the output signal of which can be supplied to the electronic means (30).

14. Method for the regulation of pressures in a compressed-air brake system having EBS, in which
- a plurality of solenoid valves (12, 14, 16, 18, 20, 22, 24) and at least two relay valves (26, 28) are used, and
- the solenoid valves (12, 14, 16, 18, 20, 22, 24) are activated by an electronic means (30),
- a control input (32, 34) of each relay valve (26, 28) being assigned at least one solenoid valve (12, 14, 22, 24),
- at least one solenoid valve (20, 22, 24) activatable by the electronic means (30) being provided for reducing a control pressure at the relay valves, and a state of the valve means (10) in which the control pressure at the relay valves (26, 28) is reduced being assumed by the application of current to the at least one solenoid valve (20, 22, 24) for reducing a control pressure,
- the at least two relay valves (26, 28) being assigned a common pressure build-up solenoid valve (16) which is activated by the electronic means (30), and
- control-pressure supply means (18, 12, 14, 55) for supplying a control pressure to the relay valves (26, 28) being provided separately from the pressure build-up solenoid valves (16), said control-pressure supply means being activated by the electronic means (30),
**characterized in that**, in the event of regulation by EBS, a state of the valve means (10) in which the control pressure at the relay valves (26, 28) is held is assumed by the pressure build-up solenoid valve (16) being switched to currentless.

15. Method according to Claim 14, **characterized in that**, as a further solenoid valve, a back-up solenoid valve (18) is used, via which, in its non-excited state, a control pressure is supplied to the relay valves (26, 28) when a brake valve (56) is actuated.

16. Method according to Claim 14 or 15, **characterized in that** the solenoid valves (12, 14, 16, 20, 22, 24) are partly designed and arranged in such a way that their magnets are excited only in the event of pressure changes.

17. Method according to one of Claims 14 to 16, **characterized**
- **in that** a common ventilation solenoid valve (20) is used for two relay valves (26, 28), which is designed as a 3/2-way solenoid valve and via which the relay valves (26, 28) can be jointly ventilated, and
- **in that**, in the event of a pressure reduction at a first relay valve (26), the ventilation solenoid valve (20) is excited, and the pressure reduction at the second relay valve (28) is prevented by the excitation of the solenoid valve (14) which is assigned to the second relay valve (28).

18. Method according to one of Claims 14 to 17, **characterized**
- **in that** a 3/2-way solenoid valve (22, 24) is used for each relay valve (26, 28), and
- **in that**, in the event of a pressure reduction, the 3/2-way solenoid valves (22, 24) are excited specifically for each relay valve (26, 28).

19. Method according to one of Claims 14 to 18, **characterized in that** an output signal of a brake-value transmitter (55) is used for influencing a control pressure of the relay valves (26, 28).

## Revendications

1. Dispositif pour réguler des pressions dans un système de freinage pneumatique avec EBS, comprenant :
- un dispositif de valves (10) qui présente plusieurs électrovannes (12, 14, 16, 18, 20, 22, 24) et au moins deux valves-relais (26, 28), et
- un dispositif électronique (30) qui commande les électrovannes (12, 14, 16, 18, 20, 22, 24) du dispositif de valves (10),
- au moins une électrovanne (12, 14, 22, 24) étant associée à une entrée de commande (32, 34) de chaque valve-relais (26, 28),
- au moins une électrovanne (20, 22, 24) pouvant être commandée par le dispositif électronique (30) étant prévue pour diminuer une pression de commande au niveau des valves-relais, et un état du dispositif de valves (10) diminuant la pression de commande au niveau des valves-relais (26, 28) étant activé par le fait que l'au moins une électrovanne (20, 22, 24) pour la diminution d'une pression de commande est parcourue par un courant,
- une électrovanne de pressurisation commune (16) pouvant être commandée par le dispositif électronique (30), étant associée aux au moins deux valves-relais (26, 28), et
- des moyens d'apport de pression de commande (18, 12, 14, 55) pouvant être commandés séparément de l'électrovanne de pressurisation (16) par le dispositif électronique (30) étant prévus pour fournir une pression de commande aux valves-relais (26, 28),
**caractérisé en ce que** le dispositif de valves (10) peut être commuté dans un état maintenant la pression de commande au niveau des valves-relais (26, 28) dans le cas d'une régulation par EBS par coupure du courant de l'électrovanne de pressurisation (16).

2. Dispositif selon la revendication 1, **caractérisé en ce que** les moyens d'apport de pression de commande présentent une électrovanne de secours (18) qui permet, dans son état non excité, de fournir une pression de commande aux valves-relais (26, 28) lors de l'actionnement d'une valve de frein (56).

3. Dispositif selon la revendication 1 ou 2, **caractérisé en ce que** les électrovannes (12, 14, 16, 18, 20, 22, 24) sont réalisées et disposées en partie de telle sorte que leurs aimants soient excités uniquement par des variations de pression.

4. Dispositif selon au moins la revendication 2, **caractérisé en ce que** l'électrovanne de pressurisation (16) et l'électrovanne de secours (18) sont à chaque fois réalisées sous forme d'électrovanne à 2/2 voies.

5. Dispositif selon la revendication 2 ou selon les revendications 2 et 3, **caractérisé en ce que**
- l'électrovanne de pressurisation (16) est réalisée sous forme d'électrovanne à 2/2 voies, et
- l'électrovanne de secours 918) est réalisée sous forme d'électrovanne à 3/2 voies.

6. Dispositif selon l'une quelconque des revendications précédentes, **caractérisé en ce que** l'on associe à chaque valve-relais (26, 28) une connexion d'air extérieur (36, 38).

7. Dispositif selon l'une quelconque des revendications précédentes, **caractérisé en ce que**
- l'on prévoit deux valves-relais (26, 28),
- les valves-relais (26, 28) sont orientées horizontalement sur un axe commun et
- les valves-relais (26, 28) ont une connexion d'air extérieur commune (40).

8. Dispositif selon l'une quelconque des revendications précédentes, **caractérisé en ce que** les électrovannes de maintien (12, 14) associées aux valves-relais (26, 28) sont à chaque fois réalisées sous forme d'électrovannes à 2/2 voies.

9. Dispositif selon l'une quelconque des revendications précédentes, **caractérisé en ce qu'**une électrovanne de purge commune (20), réalisée sous forme d'électrovanne à 3/2 voies, est associée à plusieurs valves-relais (26, 28).

10. Dispositif selon l'une quelconque des revendications précédentes, **caractérisé en ce qu'**il est réalisé sous forme de module de régulation de pression avec cinq électrovannes (12, 14, 16, 18, 20).

11. Dispositif selon l'une quelconque des revendications 1 à 7, **caractérisé en ce que** l'on associe à chaque valve-relais (26, 28) une électrovanne à 3/2 voies (22, 24).

12. Dispositif selon la revendication 11, **caractérisé en ce qu'**il est réalisé sous forme de module de régulation de pression avec quatre électrovannes (22, 24, 16, 18).

13. Dispositif selon l'une quelconque des revendications précédentes, **caractérisé en ce que** les moyens d'apport de pression de commande comprennent un détecteur de puissance de freinage (55) dont le signal de sortie peut être envoyé au dispositif électronique (30).

14. Procédé pour réguler des pressions dans un système de freinage pneumatique avec EBS, dans lequel :
- on utilise plusieurs électrovannes (12, 14, 16, 18, 20, 22, 24) et au moins deux valves-relais (26, 28), et
- les électrovannes (12, 14, 16, 18, 20, 22, 24) sont commandées par un dispositif électronique (30),
- au moins une électrovanne (12, 14, 22, 24) étant associée à une entrée de commande (32, 34) de chaque valve-relais (26, 28),
- au moins une électrovanne (20, 22, 24) pouvant être commandée par le dispositif électronique (30) étant prévue pour diminuer une pression de commande au niveau des valves-relais, et un état du dispositif de valves (10) diminuant la pression de commande au niveau des valves-relais (26, 28) étant activé par le fait que l'au moins une électrovanne (20, 22, 24) pour la diminution d'une pression de commande est parcourue par un courant,
- une électrovanne de pressurisation commune (16), pouvant être commandée par le dispositif électronique (30), étant associée aux au moins deux valves-relais (26, 28), et
- des moyens d'apport de pression de commande (18, 12, 14, 55), séparés de l'électrovanne de pressurisation (16), étant prévus pour fournir une pression de commande aux valves-relais (26, 28), lesquels sont commandés par le dispositif électronique (30),
**caractérisé en ce que** dans le cas d'une régulation par EBS, un état du dispositif de valves (10) maintenant la pression de commande au niveau des valves-relais (26, 28) est activé par le fait que l'électrovanne de pressurisation (16) est commutée sans courant.

15. Procédé selon la revendication 14, **caractérisé en ce que** l'on utilise comme électrovanne supplémentaire une électrovanne de secours (18) qui permet, dans son état non excité, de fournir une pression de commande aux valves-relais (26, 28) lors de l'actionnement d'une valve de frein (56).

16. Procédé selon la revendication 14 ou 15, **caractérisé en ce que** les électrovannes (12, 14, 16, 20, 22, 24) sont réalisées et disposées en partie de telle sorte que leurs aimants soient excités uniquement par des variations de pression.

17. Procédé selon l'une quelconque des revendications 14 à 16, **caractérisé en ce que**
- pour deux valves-relais (26, 28) on utilise une électrovanne de purge commune (20), réalisée sous forme d'électrovanne à 3/2 voies par le biais de laquelle les valves-relais (26, 28) peuvent être purgées en même temps, et
- pour une diminution de la pression au niveau d'une première valve-relais (26), l'électrovanne de purge (20) est excitée et la diminution de pression au niveau de la deuxième valve-relais (28) est empêchée par excitation de l'électrovanne (14) qui est associée à la deuxième valve-relais (28).

18. Procédé selon l'une quelconque des revendications 14 à 17, **caractérisé en ce que**
- pour chaque valve-relais (26, 28), on utilise une électrovanne à 3/2 voies (22, 24) et
- pour une diminution de pression, les électrovannes à 3/2 voies (22, 24) sont spécifiquement excitées pour chaque valve-relais (26, 28).

19. Procédé selon l'une quelconque des revendications 14 à 18, **caractérisé en ce que** l'on utilise un signal de sortie d'un détecteur de puissance de freinage (55) pour influencer une pression de commande des valves-relais (26, 28).
